# EUROPÄISCHE PATENTANMELDUNG

(11) **EP 4 336 773 A1**
(43) Veröffentlichungstag der Anmeldung: **13.03.2024**
(21) Anmeldenummer: 22194433.3
(22) Anmeldetag: 07.09.2022
(51) Int. Cl.: H04L 9/00

(54) **SYSTEM UND VERFAHREN ZUM DURCHFÜHREN VON BERECHNUNGEN IM ZUSAMMENHANG MIT EINER BLOCKCHAIN**

(71) Anmelder: VARTA Microbattery GmbH, 73479 Ellwangen Jagst (DE)
(72) Erfinder: Gluba, Dominik, 73430 Aalen (DE); Müller, Alexander, 86720 Nördlingen (DE); Schneider, Philipp, 86720 Nördlingen (DE)
(74) Vertreter: Ostertag & Partner Patentanwälte mbB

(57) **Zusammenfassung**

Die Erfindung betrifft ein System und ein Verfahren zum Durchführen von Berechnungen im Zusammenhang mit einer Blockchain.

## Beschreibung

### HINTERGRUND DER ERFINDUNG

Die Erfindung betrifft ein System sowie ein Verfahren zum Durchführen von Berechnungen im Zusammenhang mit einer Blockchain.

Unter dem Begriff "Mining" werden verschiedenen Prozesse zusammengefasst, bei denen ein - hier "Mining-Gerät" genannter - Computer Rechenleistung für das Verarbeiten von Transaktionen in einer Blockchain oder auch für die Absicherung und die Synchronisierung der Blockchain zur Verfügung gestellt wird. Die Rechenleistung ist je nach Art der Blockchain erforderlich, um beispielsweise neue eigene Anteile an einer blockchainbasierten Währung, auch Kryptowährung genannt, zu erzeugen und/oder Transaktionen innerhalb des Blockchain-Netzwerks zu dokumentieren. Hier und im Folgenden soll der Begriff alle rechenintensiven kryptographischen Berechnungen umfassen, die einer relevanten Energiemenge bedürfen.

Diese Energiemenge kann ein beträchtliches Maß annehmen. Beispielsweise verbraucht die Verwaltung des Bitcoins, der momentan bekanntesten Kryptowährung, im Jahr 2022 hochgerechnet auf ein Jahr geschätzt über 120 TWh. Im Fall des Bitcoins speziell liegt der Grund für den hohen Energieverbrauch in dem Grundkonzept der Kryptowährung. Die Währung wird einerseits verteilt auf sehr vielen Computern verwaltet, die für die Speicherung und die Aktualisierung der Blockchain Strom verbrauchen. Andererseits ist es vorgesehen, dass für die Schaffung neuer eigener Anteile an der Währung - den Bitcoins - kryptographische Aufgaben gelöst werden müssen. Die Schwierigkeit dieser Aufgaben korreliert mit der dem Netzwerk zur Verfügung gestellten Rechenleistung. Gleichzeitig sinkt mit der Menge an bereits erzeugten Bitcoins die Vergütung für den einzelnen Mining-Vorgang, so dass mit fortschreitender Zeit und höherer verfügbarer Rechenleistung der Aufwand für den einzelnen Teilnehmer - und damit in der Regel auch die dafür einzusetzende Energiemenge - immer höher wird.

Das Grundprinzip der verteilten und rechenintensiven Verwaltung der Blockchain ist vielen kryptographiebasierten Projekten gemein. Die dafür zur Verfügung zu stellenden beträchtlichen Energiemengen sind ein grundsätzlicher Nachteil bei der Anwendung dieser Technologie.

Da derzeit nicht ersichtlich ist, wie der erforderliche Energieeinsatz zu verringern sein könnte, wäre es zumindest wünschenswert, den Anteil an Energie aus regenerativen Energiequellen an der aufzuwendenden Energie. Dem steht die Volatilität dieser Energiequellen hinsichtlich der Verfügbarkeit entgegen.

### ZUSAMMENFASSUNG DER ERFINDUNG

Die Erfindung betrifft ein System zum Durchführen von Berechnungen im Zusammenhang mit einer Blockchain, mit mindestens einem Mining-Gerät zum Durchführen kryptographischer Berechnungen im Zusammenhang mit der Blockchain, mindestens einer regenerativen Energiequelle, welche elektrische Energie erzeugt, und mindestens einem Speicher für elektrische Energie der regenerativen Energiequelle, wobei die abrufbare elektrische Leistung und/oder der Energieertrag der Energiequelle im Laufe eines Tages- und/oder eines Jahres veränderlich sind, wobei das mindestens eine Mining-Gerät dazu eingerichtet ist, von der mindestens einen Energiequelle oder dem mindestens einen Energiespeicher Energie für das Durchführen der kryptographischen Berechnung abzunehmen.

Erfindungsgemäß ist eine Steuereinrichtung vorgesehen, die dazu eingerichtet ist, das Durchführen der kryptographischen Berechnung durch das Mining-Gerät so anzupassen, dass sich der Verbrauch der elektrischen Energie entsprechend verändert, wobei das Anpassen in Abhängigkeit von mindestens einem die Energiequelle, den Energiespeicher und/oder das Versorgungsnetz betreffenden Messwert und/oder mindestens einem die Energiequelle, den Energiespeicher und/oder das Versorgungsnetz betreffenden Prognosewert erfolgt. Beispielsweise kann das Mining-Gerät dem Mining Prozess weniger Rechenleistung zur Verfügung stellen, es braucht dann weniger Energie und entsprechend sinkt dann die Menge der erzeugten kryptographischen Währung. In einem anderen Fall kann das Mining-Gerät dem Mining Prozess mehr Rechenleistung zur Verfügung stellen, es braucht dann mehr Energie und entsprechend steigt dann die Menge der erzeugten kryptographischen Währung.

Bei dem Mining-Gerät kann es sich beispielsweise um einen für diesen Zweck besonders geeigneten oder einen eigens für diesen Zweck angepassten Computer handeln.

Bei dem Durchführen kryptographischer Berechnungen kann es sich beispielsweise um das Berechnen neuer eigener Anteile an einer Kryptowährung, das Bestätigen, Absichern und/oder Durchführen von Transaktionen in einer Blockchain oder ähnliche Berechnungen handeln- und damit um energieintensive Vorgänge im Zusammenhang mit einer Blockchaintechnologie.

Bei der mindestens einen regenerativen Energiequelle kann es sich beispielsweise um eine Photovoltaikanlage handeln, bei der mittels Solarzellen Sonnenstrahlung in elektrische Energie umgewandelt wird. Alternativ oder zusätzlich kann die mindestens eine regenerative Energiequelle beispielsweise elektrische Energie mit Hilfe von Windkraft oder Wasserkraft erzeugen. Gemeinsam ist diesen Energiequellen, dass die momentan zur Verfügung stehende Energie im Laufe eines definierten Zeitraums, beispielsweise eines Tages oder eines Jahres, veränderlich ist und nicht immer exakt vorausgesagt werden kann. Bei einer Photovoltaikanlage ist dies beispielsweise bedingt durch Sonnenstand und/oder Bewölkungsgrad.

Bei dem Speicher für elektrische Energie kann es sich beispielsweise um einen Batteriespeicher handeln. Dieser kann eine bestimmte maximale Speicherkapazität sowie eine je nach Ladestand maximale Be- und Entladeleistung aufweisen.

Bei dem Versorgungsnetz handelt es sich in der Regel um ein Netzwerk zur Übertragung und Verteilung elektrischer Energie. Je nach Größe der regenerativen Energiequelle kann es sich beispielsweise um ein Ortsnetz oder Stadtnetz handeln, das seinerseits wiederum in ein Verbundnetz eingebunden sein kann. Es kann sich aber auch um ein Einspeisenetz handeln, das an ein Übertragungsnetz angebunden sein kann.

Das Anpassen des Durchführens der kryptographischen Berechnungen kann beispielsweise auch durch die Anzahl der an der Berechnung beteiligten Mining-Geräte, durch die Wahl der zu bedienenden Blockchaintechnologie und/oder durch die Wahl der Art der kryptographischen Berechnung erfolgen.

Wie oben ausgeführt, kann das Anpassen durch die Steuereinrichtung in Abhängigkeit des mindestens einen Messwerts, der die Energiequelle, den Energiespeicher und/oder das Versorgungsnetz betrifft, erfolgen. Mittels eines solchen Messwerts, der beispielsweise den Zustand der Energiequelle, des Energiespeichers und/oder des Versorgungsnetzwerks, beispielsweise bezüglich seiner Fähigkeit, Energie abzugeben oder aufzunehmen, beschreibt, kann die Steuereinrichtung die Durchführung von kryptographischen Berechnungen entsprechend dem Messwert anpassen. Vorzugsweise werden also nur in einem solchen Umfang kryptographische Berechnungen mit dem Mining-Gerät durchgeführt, wie es der jeweilige Messwert betreffend die Energiequelle, den Energiespeicher und/oder das Versorgungsnetz zulässt.

Ähnliches gilt für den mindestens einen Prognosewert betreffend die Energiequelle, den Energiespeicher und/oder das Versorgungsnetz. Ein solcher Prognosewert ermöglicht Vorhersagen betreffend einen zukünftigen Zustand der Energiequelle, des Energiespeichers und/oder des Versorgungsnetzes, beispielsweise zu einem bestimmten Zeitpunkt oder während eines zukünftigen Zeitraums. Darauf aufbauend ist wiederum eine Anpassung der Durchführung kryptographischer Berechnungen mittels des Mining-Geräts möglich, um dem prognostizierten zukünftigen Status Rechnung zu tragen.

Konkret kann der mindestens eine Messwert beispielsweise eine an das Versorgungsnetz abgegebene Strom- oder Energiemenge oder eine von dem Versorgungsnetz bezogene Strom- oder Energiemenge, ein Ladezustand des Energiespeichers, eine Auslastung des Versorgungsnetzwerks, eine momentane Einspeisevergütung, eine momentaner Strompreis, eine momentane Vergütung für die Durchführung der kryptographischen Berechnungen oder ähnliches sein.

Die Anpassung der Durchführung kryptographischer Berechnungen kann in besonders bevorzugten Ausführungsformen auch dahingehend erfolgen, dass ein auf dem Mining-Gerät laufender erster Algorithmus zur Erzeugung einer ersten Kryptowährung gestoppt oder niedriger priorisiert wird und ein zweiter Algorithmus zur Erzeugung einer zweiten Kryptowährung auf dem Mining-Gerät gestartet oder höher priorisiert wird. Kryptowährungen wie der Bitcoin benötigen vergleichsweise rechenintensive kryptographische Berechnungen. Hierzu gibt es mittlerweile stromsparende Alternativen, beispielsweise sogenannte grüne Kryptowährungen wie Cardano, Tron, Chia, Signum und Iota. Es kann entsprechend vorgesehen sein, dass, wenn aus einem Prognosewert abgeleitet wird, dass in einem definierten Zeitraum viel Energie zur Verfügung steht, über die Steuereinrichtung veranlasst wird, dass besagter erster Algorithmus ausgeführt oder zumindest höher priorisiert und das Mining-Gerät eine Kryptowährung wie den Bitcoin schürft, deren Erzeugung vergleichsweise rechenintensive kryptographische Berechnungen erfordert. Wenn hingegen aus einem Prognosewert abgeleitet wird, dass in einem definierten Zeitraum wenig Energie zur Verfügung steht, kann über die Steuereinrichtung veranlasst werden, dass das Mining-Gerät besagten zweiten Algorithmus ausführt oder zumindest höher priorisiert und eine Kryptowährung schürft, deren Erzeugung weniger rechenintensive kryptographische Berechnungen erfordert.

In besonders bevorzugten Ausführungsform der Erfindung ist die Steuereinrichtung mit einer Datenquelle gekoppelt, welche Währungskurse von Kryptowährungen liefern kann. In bevorzugten Ausführungsformen finden diese Kurse bei der Auswahl der zu schürfenden Kryptowährung und/oder bei einem Wechsel des besagten Algorithmus Berücksichtigung.

Bei einer konkreten bevorzugten Ausführungsform kann vorgesehen sein, dass der mindestens eine Messwert die abgebbare Leistung der Energiequelle, die von dem Energiespeicher aufnehmbare Leistung, den Ladezustand des Energiespeichers und/oder die im Versorgungsnetz verfügbare Leistung abbildet. Auf diese Weise können, wie bereits angedeutet, in vorteilhafter Weise die von der Energiequelle abgebbare Leistung mit dem momentanen Ladezustand des Energiespeichers, dessen aufnehmbarer Ladeleistung und/oder einem eventuell momentan im Versorgungsnetz herrschenden Energieüberschuss bei der Anpassung der Durchführung von kryptographischen Berechnungen berücksichtigt werden.

Bevorzugt können das Mining-Gerät, die Energiequelle und der Energiespeicher über den gleichen Netzeinspeisepunkt mit dem Versorgungsnetz verbunden sein. Des Weiteren können zusätzlich neben dem Mining-Gerät und dem Energiespeicher weitere Verbraucher an dem gleichen Netzeinspeisepunkt vorhanden sein. In diesem Fall kann es vorteilhaft sein, wenn der mindestens eine Messwert die über den Netzeinspeisepunkt an das Versorgungsnetz abgegebene bzw. die von dem Versorgungsnetz über den Netzeinspeisepunkt von dem Mining Gerät, dem Energiespeicher und dem Verbraucher aufgenommene Leistung beschreibt. Besteht beispielsweise die Zielsetzung, den wirtschaftlichen Ertrag der regenerativen Energiequelle zu optimieren, kann es bei einem entsprechenden Verhältnis aus Einspeisevergütung für in das Versorgungsnetz abgegebene Leistung beziehungsweise Energie zu den Kosten für eine aus dem Versorgungsnetz aufgenommene Leistung bzw. Energie sinnvoll sein, möglichst geringe Mengen an Energie über den Netzeinspeisepunkt an das Versorgungsnetz abzugeben. Ist die von den übrigen Verbrauchern aufnehmbare Leistung durch die Energiequelle abgedeckt und der Energiespeicher entweder bereits gefüllt oder mit maximaler Ladeleistung versorgt oder eine weitere Aufladung des Energiespeichers nicht sinnvoll, kann die überschüssige Energie durch die Steuereinrichtung an das Mining-Gerät geleitet werden. Dieses kann durch Durchführen von kryptographischen Berechnungen einen vergütbaren Mehrwert erzeugen und so den wirtschaftlichen Ertrag der Energiequelle erhöhen. Umgekehrt kann bei einem zeitweisen Rückgang der von der Energiequelle abrufbaren elektrischen Energie die von dem Mining-Gerät aufgenommene elektrische Energie bzw. Leistung reduziert und so die von dem Versorgungsnetz bezogene Energie bzw. Leistung verringert oder auf Null eingestellt werden.

Bei einer bevorzugten Ausführungsform ist es vorgesehen, dass der mindestens eine Prognosewert zu einem bestimmten Zeitpunkt und/oder während eines bestimmten Zeitraums eine Verfügbarkeit der von der Energiequelle und/oder dem Energiespeicher abrufbaren Energie bzw. Leistung und/oder die Auslastung des Versorgungsnetzes beschreibt. Bei dem mindestens einen Prognosewert kann es sich beispielsweise um eine Wetterinformation handeln, anhand derer kalkuliert werden kann, in welchem Umfang die Energiequelle in dem Zeitraum abrufbare Energie zur Verfügung stellt. Weiterhin kann es sich bei dem Prognosewert auch um einen Verbrauchswert handeln, der anhand von Verbrauchsdaten aus der Vergangenheit ermittelt wurde und angibt, mit welchem Energieverbrauch durch einen oder mehrere mit der Energiequelle und/oder dem Energiespeicher gekoppelte elektrische Verbraucher in dem Zeitraum zu rechnen ist.

Zusätzlich oder alternativ kann der mindestens eine Prognosewert - wie auch der mindestens eine Messwert - eine aktuelle oder zukünftige Vergütung für die Durchführung von kryptographischen Berechnungen, den Energiepreis für Entnahme und Einspeisung, oder ähnliches beschreiben. Auf diese Weise können intelligente und vorausschauende Vorgehensweisen durch die Steuereinrichtung für das Durchführen der kryptographischen Berechnungen durch das Mining-Gerät umgesetzt werden.

Bei einer konkreten Ausführungsform kann vorgesehen sein, dass die Steuereinrichtung so eingerichtet ist, dass sie eine Mehrzahl an Mining-Geräten so ansteuern kann, dass ein Energieüberschuss im Versorgungsnetz durch die Mehrzahl von Mining-Geräten zumindest teilweise aufnehmbar ist. Dabei kann der Energieüberschuss beispielsweise aus einem konkreten Messwert abgeleitet, mittels eines Prognosewerts vorhersehbar oder durch ein an die Steuereinrichtung übermitteltes Datensignal festgestellt und die Übernahme von Leistung durch die Mining-Geräte in entsprechendem Umfang durchgeführt werden.

Die Erfindung betrifft des Weiteren ein Verfahren zum Durchführen von kryptographischen Berechnungen im Zusammenhang mit einer Blockchain. Das Verfahren umfasst zumindest die folgenden Schritte:
- Bestimmen einer Verfügbarkeit einer elektrischer Energie einer regenerativen Energiequelle, bei der sich die abrufbare elektrische Leistung und/oder deren Energieertrag im Laufe eines Tages und/oder eines Jahres verändern kann,
   und/oder
   Bestimmen der Verfügbarkeit der elektrischen Energie eines Energiespeichers, der von einer solchen regenerativen Energiequelle befüllbar ist
      und/oder
   Bestimmen der Verfügbarkeit einer elektrischen Energie eines Versorgungsnetzes; und
- Anpassen eines Durchführens kryptographischer Berechnungen in Korrelation mit der Verfügbarkeit der elektrischen Energie mit dem Ziel, die für das Durchführen der kryptographischen Berechnungen benötigte elektrische Energie an die Verfügbarkeit der elektrischen Energie anzupassen.

Besonders bevorzugt erfolgt die Durchführung des erfindungsgemäßen Verfahrens mit Hilfe des erfindungsgemäßen Systems. Die im Rahmen der Beschreibung des erfindungsgemäßen Systems getroffenen Begriffsbestimmungen gelten auch für das erfindungsgemäße Verfahren.

Allerdings lässt sich das erfindungsgemäße Verfahren keinesfalls nur mit oder innerhalb des erfindungsgemäßen Systems durchführen. Insbesondere kann das Verfahren auch ohne besagten Schritt des Bestimmens der Verfügbarkeit der elektrischen Energie eines Energiespeichers erfolgen. In diesen Fällen kann ein Mining-Gerät beispielsweise unmittelbar mit elektrischer Energie aus der regenerativen Energiequelle gespeist werden.

Das mindestens eine Mining-Gerät ist bevorzugt mit mindestens einer regenerativen Energiequelle und/oder mindestens einem Energiespeicher, wie sie oben beschrieben wurden, gekoppelt und kann von diesen elektrische Energie für das Durchführen der kryptographischen Berechnung beziehen.

Das Anpassen des Durchführens der kryptographischen Berechnungen erfolgt bevorzugt mittels der oben beschrieben Steuereinrichtung, die mit mindestens einem Mining-Gerät verbunden und dazu eingerichtet ist, das Durchführen der kryptographischen Berechnungen durch das mindestens eine Mining-Gerät so anzupassen, dass sich der Verbrauch der elektrischen Energie durch das Mining-Gerät entsprechend verändert. Die Steuereinrichtung ist, wie oben bereits ausgeführt, zu diesem Zweck bevorzugt zum Empfang und/oder zur Verarbeitung und/oder zur Berechnung eines Messwerts oder eines Prognosewerts, welcher die mit dem Mining-Gerät verbundene Energiequelle, den mit dem Mining-Gerät verbundenen Energiespeicher und/oder das mit dem Mining-Gerät verbundene Versorgungsnetz betrifft, eingerichtet. So kann das Anpassen des Durchführens kryptographischer Berechnungen in Abhängigkeit von diesem Messwert oder diesem Prognosewert erfolgen.

Details zum Anpassen des Durchführens der kryptographischen Berechnungen wurden bereits im Zusammenhang mit der Beschreibung des erfindungsgemäßen Systems beschrieben.

Die Erfindung betrifft des Weiteren eine Steuereinrichtung für ein wie vorstehend beschriebenes System sowie eine Steuereinrichtung für die Durchführung eines wie vorstehend beschriebenen Verfahrens.

### KURZE BESCHREIBUNG DER ZEICHNUNGEN

Nachfolgend werden zur Erläuterung der erfindungsgemäßen Gegenstände Ausführungsbeispiele der Erfindung anhand der Zeichnungen näher erläutert. In diesen zeigen:
- Figur 1: ein Schaubild für einen erfindungsgemäßen Aufbau einer ersten Ausführungsform;
- Figur 2: ein Schaubild für einen erfindungsgemäßen Aufbau einer zweiten Ausführungsform;
- Figur 3: ein Schaubild für einen erfindungsgemäßen Aufbau einer dritten Ausführungsform;
- Figur 4: ein Ablaufdiagramm für ein erstes erfindungsgemäßes Verfahren; und
- Figur 5: ein Ablaufdiagramm für ein zweites erfindungsgemäßes Verfahren.

### BESCHREIBUNG BEVORZUGTER AUSFÜHRUNGSBEISPIELE

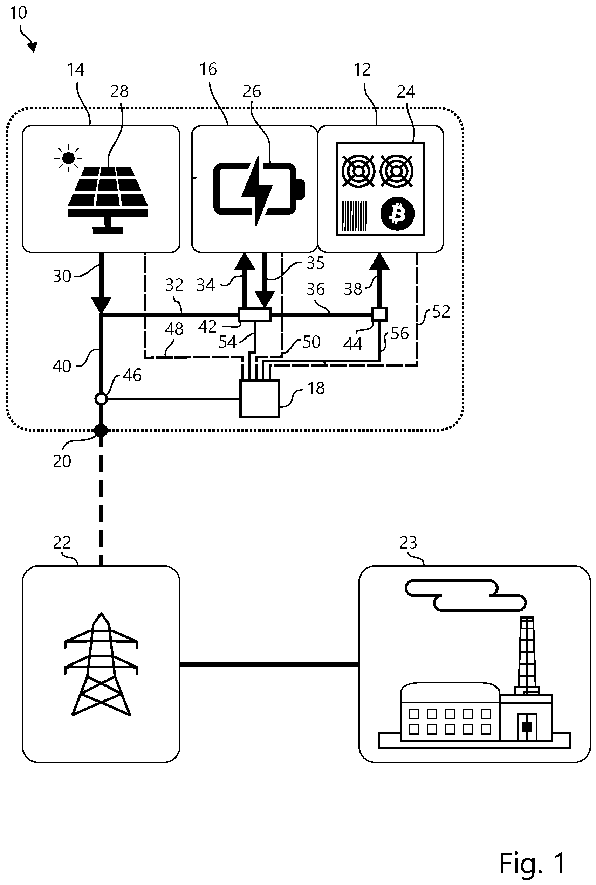

Figur 1 veranschaulicht in einem generellen Schaubild einen bevorzugten Aufbau eines erfindungsgemäßen Systems 10. Das System 10 umfasst ein Mining-Gerät 12, eine regenerative Energiequelle 14, einen Speicher 16 für elektrische Energie sowie eine Steuereinrichtung 18.

Das System 10 befindet sich in der gezeigten Ausführungsform vollständig diesseits eines Netzeinspeisepunkts 20 und ist über diesen mit einem Versorgungsnetz 22 verbunden. Von dem Versorgungsnetz 22 kann Energie von einem Energieversorgungsunternehmen 23 bezogen werden und überschüssige Energie des Systems 10 kann an das Versorgungsnetz 20 abgegeben werden.

Bei dem Mining-Gerät 12 kann es sich bei einer bevorzugten Ausführungsform um einen GPU-Kryptominer 24 mit einem Single-Board-Computer (SBC) auf einer x86/x64/ARM-Plattform handeln. Dieser ist in der Lage, verschiedene Kryptowährungen zu minen.

Bei dem Speicher für elektrische Energie 16 kann es sich beispielsweise um einen Akkumulator 26 auf Basis von Lithium-lonen-Technologie handeln, bevorzugt mit Elektrode auf Basis der sogenannten NMC-Technologie (Lithium-Nickel-Mangan-Kobalt-Oxid-Technologie.) handeln. Es können alternativ aber auch andere Technologien wie beispielsweise NCA (Lithium-Nickel-Kobalt-Aluminium-Oxide) oder LFP (Lithium-Eisenphospat) eingesetzt werden. Selbstverständlich können auch nicht Li-ionen-basierte Energiespeicher zum Einsatz kommen. Vorteilhafte Speichergrößen liegen zwischen 3 kWh und 30 kWh. Es können aber auch kleinere oder größere Energiespeicher eingesetzt werden.

Die regenerative Energiequelle 14 kann beispielsweise vorteilhaft als Photovoltaik-Anlage 28 ausgestaltet sein. Alternativ oder zusätzlich kann auch beispielsweise eine Windkraftanlage oder eine Anlage zur Gewinnung von Energie aus Wasserkraft oder ein Blockheizkraftwerk eingesetzt bzw. kombiniert werden.

Der regenerative Energiespeicher 14, der elektrische Energiespeicher 16 und das Mining-Gerät 12 sind so miteinander verbunden, dass Energieströme untereinander wie folgt stattfinden können: Die regenerative Energiequelle 14 kann die erzeugte Energie bzw. Leistung über Leitungen 30, 32, 34 an den Energiespeicher 16 abgeben. Zusätzlich oder alternativ kann die Photovoltaikanlage über die Leitungen 30, 32, 36, 38 Energie an das Mining-Gerät 12 abgeben.

Der Energiespeicher 16 kann über die Leitung 34 Energie aufnehmen und über die Leitung 35 Energie abgeben. Bevorzugt erfolgt in der Praxis die Energieaufnahme und Energieabgabe über die gleiche Leitung, also entweder über die Leitung 34 oder die Leitung 35. Die Steuereinrichtung 18 legt fest, wie die Energieflüsse stattfinden und steuert diese über die Knotenpunkte 42, 44. Zur Erfassung der an das Versorgungsnetz 22 abgegebenen bzw. von dort bezogenen Energie ist ein Sensor 46 in der Leitung 40 vorgesehen. Dieser kann beispielsweise als Strommessgerät ausgebildet sein und erkennen, in welche Richtung, also ob in das System 10 hinein oder aus dem System 10 heraus, die Energie fließt.

Die Steuereinrichtung 18 ist über Sensor- bzw. Datenleitungen 48, 50, 52 mit der Energiequelle 14, dem Energiespeicher 16 und dem Mining-Gerät 12 verbunden und kann über diese Leitungen Informationen mit den Einheiten austauschen. Über die Knotenpunkte 42, 44 - mit denen die Steuereinrichtung über Steuerleitungen 54, 56 verbunden ist - wäre es möglich, die Energieströme in dem System 10 leiten. In der Praxis gibt es extern steuerbare Knotenpunkte allerdings meist nicht. Die Höhe des ein- und austretenden Stroms richtet sich einfach nach dem Verbraucher/Erzeuger. Somit findet die Steuerung in der Praxis direkt im Verbraucher/Erzeuger statt.

Zu betonen ist in diesem Zusammenhang, dass es sich bei der Steuereinrichtung 18 nicht zwingend um ein eigenes Gerät handeln muss, das mit dem Energiespeicher 16 und dem Mining-Gerät 12 verbunden ist. Bei der Steuereinrichtung 18 kann es sich auch um eine Softwarekomponente oder einen Microchip handeln, welche oder welcher beispielsweise innerhalb des Energiespeichers oder des Mining-Geräts oder auch des Stromsensors 46 ausgeführt wird oder angeordnet ist. Je nach Ausführungsform sind dann keine externen Sensor- bzw. Datenleitungen oder anderweitige Verbindungen zwischen der Steuereinrichtung und dem Gerät, in das sie integriert ist, erforderlich. Der Datenaustausch kann etwa innerhalb der Software stattfinden.

Grundsätzlich kann der Datenaustausch zwischen dem Energiespeicher 16, dem Mining-Gerät 12, dem Stromsensor 46 und gegebenenfalls anderen Geräten wie einem PV Wechselrichter auch drahtlos (z.B. per WLAN) erfolgen.

Im Folgenden sollen nun verschiedene Betriebsmodi des Systems 10 erläutert werden.

### Betriebsmodus "Messwertgesteuertes Mining"

In diesem Betriebsmodus erzeugt die regenerative Energiequelle 14 Energie. Die momentan abrufbare Leistung übersteigt die momentan mögliche Ladeleistung des Energiespeichers 16. Dies kann beispielsweise der Fall sein, wenn der Energiespeicher 16 bereits vollständig gefüllt ist oder die angebotene Leistung höher als die maximale Ladeleistung des Energiespeichers 16 zum momentanen Zeitpunkt ist. Herkömmlicherweise bliebe in diesem Szenario als einzige Möglichkeit, die überschüssige Energie der regenerativen Energiequelle 14 an das Versorgungsnetz 22 abzugeben. Erfindungsgemäß kann nun diese Leistung über die Versorgungsleitungen 30, 32, 36, 38 an das Mining-Gerät 12 abgegeben werden. Auf diese Weise kann mit der überschüssigen Energie Wertschöpfung in System 10 erreicht werden. Die Steuereinrichtung 18 überwacht dabei über den Stromsensor 46 die an das Versorgungsnetz 22 abgegebene Energie. Reicht die von der regenerativen Energiequelle erzeugte Leistung nicht aus, das Mining-Gerät 12 zu betreiben, wird dieses über die Steuereinrichtung 18 abgeschaltet bzw. deaktiviert.

### Betriebsmodus "Prognosebasiertes Mining"

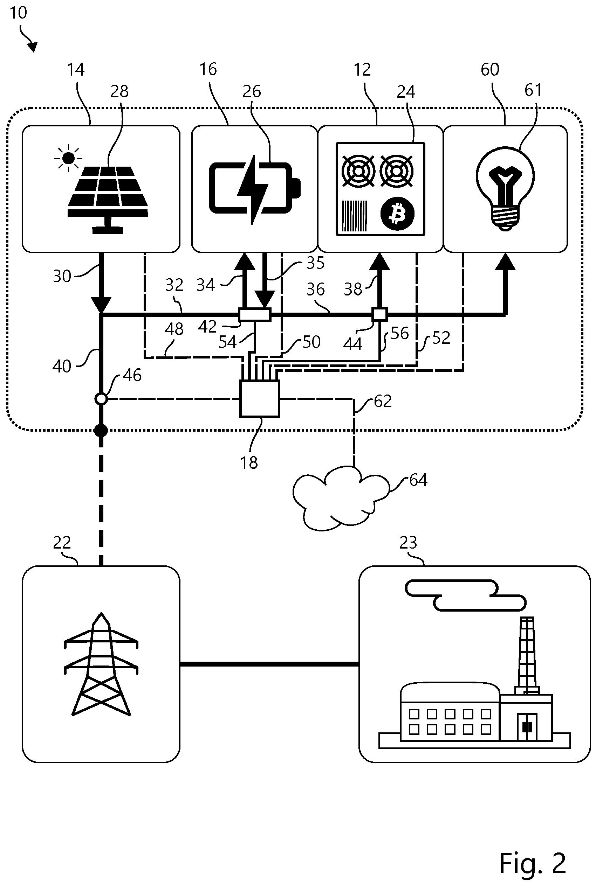

Dieser Modus wird nun anhand der Figur 2 als weitere Ausgestaltung der Erfindung erläutert. Prinzipiell wäre der prognosebasierte Modus auch im Zusammenhang mit Figur 1 denkbar. Merkmale, die denen der Ausführungsform der Figur 1 gleichen, sind mit den gleichen Bezugszeichen bezeichnet und werden - um unnötige Wiederholungen zu vermeiden - nicht nochmals erläutert.

Zusätzlich zu der regenerativen Energiequelle 14, dem elektrischen Energiespeicher 16 und dem Mining-Gerät 12 weist die Ausführungsform einen Verbraucher 60 auf. Dieser kann beispielsweise den diesseits eines Netzeinspeisepunkts angeordneten Verbraucher 61 umfassen. Prinzipiell handelt es sich bei dem Verbraucher 60 um eine Last, die temporär oder dauerhaft innerhalb des Systems zu erbringen ist.

Des Weiteren weist die Ausführungsform der Figur 2 zusätzlich eine Anbindung an eine Informationsquelle 64 auf. Bei der Informationsquelle kann es sich um eine externe Informationsquelle wie beispielsweise einen internetbasierten Informationsdienst oder eine Datenbank handeln. Beispiele hierfür sind ein Wetterdienst, ein Dienst, der aktuelle Währungskurse anbietet oder ähnliches. Es kann sich aber auch um eine Informationsquelle handeln, die sich innerhalb des System 10 befindet, wie beispielsweise eine Wetterstation, welche aktuelle Wetterdaten ermittelt und aufzeichnet oder historische Wetterdaten gespeichert hat und für die Steuereinrichtung 18 abrufbar bereithält. Gleichzeitig oder alternativ kann die Informationsquelle 64 Aufzeichnungen über das historische Verbrauchsverhalten des Verbrauchers 60 beinhalten.

Die Steuereinrichtung 18 ist nun derart ausgelegt, dass sie alleine unter Verwendung eines eigenen Datensatzes, unter Verwendung der von der Informationsquelle 64 angebotenen Daten und/oder im engen Zusammenspiel mit der Informationsquelle 64 unter Verwendung von historischen Ertragsdaten, historischen Wetterdaten, historischen Verbrauchsdaten und/oder unter Beachtung aktueller Messwerte mittels eines heuristischen Vorhersageansatzes und/oder unter Verwendung einer künstlichen Intelligenz eine Prognose über den zu erwartenden Energieertrag der regenerativen Energiequelle 14 und/oder den zu erwartenden Verbrauch des Verbrauchers 60 trifft.

Die Prognose kann dabei besonders bevorzugt einen Zeitraum betreffen, der mit der üblichen Periodendauer der Ertragsschwankungen der regenerativen Energiequelle 14 - bei einer Photovoltaikanlage 28 beispielsweise ein Tag) und/oder dem Speichervolumen des Energiespeichers 26 korreliert.

Ausgehend von dieser Prognose kann die Steuereinrichtung 18 den Speicherzustand des elektrischen Speichers 16 ansteuern. Wenn beispielsweise während eines Zeitraums, in dem die Energiequelle 14 keine Energie bereitstellen kann, der elektrische Speicher 16 noch erheblich gefüllt ist und in dem Zeitraum bei zur erneuten prognostizierten Energiebereitstellung durch die Energiequelle 14 keine vollständige Entleerung durch die im System 10 vorhandenen Verbraucher 12 prognostiziert ist, kann die Steuereinrichtung 18 ein gezieltes Entleeren des Speichers 16 herbeiführen, indem sie das Mining-Gerät 12 mit der Durchführung von kryptographischen Berechnungen beauftragt. Somit kann auf diese Weise die im Energiespeicher 16 befindliche Restenergie einer wirtschaftlichen Verwendung zugeführt werden.

### Betriebsmodus "Vermeiden von Abregelungsverlusten"

Zur Gewährleistung der Netzstabilität bei regenerativen Energiequellen, die eine stark schwankende Ertragscharakteristik-wie beispielsweise Photovoltaikanlagen - aufweisen, können entweder eine durch den Netzbetreiber des Versorgungsnetzes kontrollierbare Einspeisebegrenzung oder bei kleineren Anlagen eine Kappung der in das Versorgungsnetz einspeisbaren Wirkleistung auf höchstens 70% der Maximalleistung der Anlage vorgesehen sein.

Bei den Ausführungsformen der Figuren 1 und 2 kann die Steuereinrichtung 18 dementsprechend ausgelegt sein, bei Auftreten der Wirkleistungsbegrenzung die nun frei verfügbare Energie, die nicht von den Versorgungsnetz 22 aufgenommen wird, dem Mining-Gerät 12 zur Verfügung zu stellen. Auf diese Weise kann die anderweitig nicht nutzbare Energie einer wirtschaftlichen Verwertung durch das System 10 zugeführt werden.

### Betriebsmodus "Notstrom"

Bei einer bevorzugten Ausführungsform der Figuren 1 und 2 ist der Energiespeicher 16 notstromfähig, d.h., das System 10 kann bei fehlender Bereitstellung von elektrischer Energie durch das Versorgungsnetz 22 Energie aus dem Speicher 16 beziehen, um seine Funktionen aufrecht zu erhalten. Ist der Ausfall des Versorgungsnetzes 22 von kurzer Dauer, kann ein Betrieb des Mining-Geräts 12 aufrechterhalten werden. Somit kann versorgerunabhängig ein Einkommen durch das System 10 erzeugt werden. Gleichzeitig oder alternativ kann die Abhängigkeit von einem Energieversorgungsunternehmen 23 verringert werden.

### Betriebsmodus "Netzentlastung"

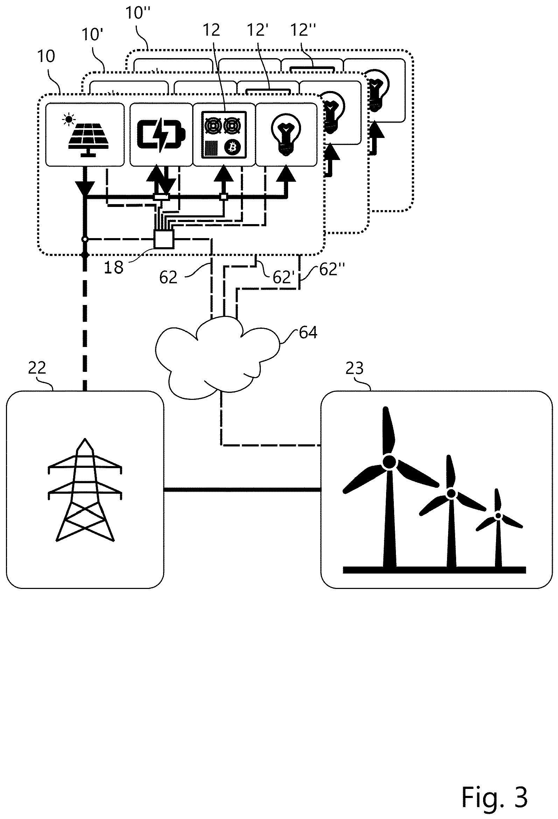

Fig. 3 zeigt eine weitere Ausführungsform. Merkmale, die denen der Ausführungsform der Figur 1 und/oder Figur 2 gleichen, sind mit den gleichen Bezugszeichen bezeichnet und werden - um unnötige Wiederholungen zu vermeiden - nicht nochmals erläutert.

Bei der Ausführungsform der Figur 3 ist die Steuereinrichtung 18 so eingerichtet, dass sie ein Signal eines Energieversorgungsunternehmens 23 empfangen kann. Auf dieses Signal hin ist die Steuereinrichtung des Systems 10 so eingerichtet, dass die Steuereinrichtung 18 das Mining 12-Gerät zur Durchführung kryptographischer Berechnungen und damit zum Energieverbrauch ansteuern kann. Besonders vorteilhaft ist es in diesem Zusammenhang, wenn eine entsprechende Anzahl an Mining-Geräten mehrerer Systeme - hier beispielhaft Systeme 10, 10', 10" in zeitlichem Zusammenhang als steuerbare "virtuelle" Verbraucher einsetzbar sind. Dies kann vorteilhaft zu einer Stabilisierung des Versorgungsnetzes durch eine Netzentlastung bei einem vorhandenen Energieüberschuss eingesetzt werden. Besonders vorteilhaft kann in diesem Zusammenhang sein, wenn die einzelnen Mining-Geräte 12 in ihrer Leistung in gewissem Umfang steuerbar sind.

Im Gegenzug kann vorgesehen sein, dass das einzelne System 10, 10', 10" für die Abnahme des überschüssigen Stroms durch besonders günstigen oder kostenlosen Strom entlohnt wird.

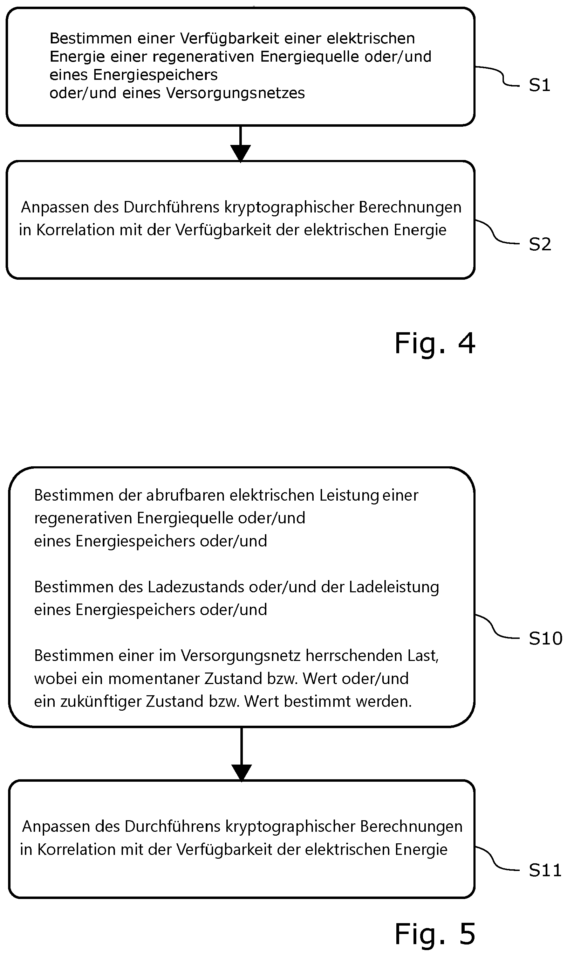

Die Figuren 4 und 5 zeigen zwei Varianten des erfindungsgemäßen Verfahrens.

Die Ausführungsform der Figur 4 umfasst ein Verfahren zum Durchführen von kryptographischen Berechnungen im Zusammenhang mit einer Blockchain. Das Verfahren umfasst die Schritte eines Bestimmens einer Verfügbarkeit einer elektrischer Energie (S1) einer regenerativen Energiequelle, bei der sich die abrufbare elektrische Leistung und/oder deren Energieertrag im Laufe eines Tages und/oder eines Jahres verändern kann, und/oder eines Energiespeichers, der von einer solchen regenerativen Energiequelle befüllbar ist und/oder eines Versorgungsnetzes; sowie des Anpassen des Durchführens kryptographischer Berechnungen in Korrelation mit der Verfügbarkeit der elektrischen Energie (S2). Dabei wird das Ziel verfolgt, die für das Durchführen der kryptographischen Berechnungen benötigte elektrische Energie an die Verfügbarkeit der elektrischen Energie anzupassen.

Das Anpassen des Durchführens kryptographischer Berechnungen kann eine oder mehrere der im Zusammenhang mit dem erfindungsgemäßen System und dem erfindungsgemäßen Verfahren beschriebenen Maßnahmen umfassen.

Die in Figur 5 dargestellte Variante des erfindungsgemäßen Verfahrens zum Durchführen von kryptographischen Berechnungen im Zusammenhang mit einer Blockchain umfasst den Schritt eines Bestimmens einer Verfügbarkeit einer elektrischen Energie einer regenerativen Energiequelle oder/und eines Energiespeichers (S10), indem die von der Energiequelle und/oder dem Energiespeicher abrufbare elektrische Leistung und/oder der Ladezustand des Energiespeichers und/oder die Ladeleistung des Energiespeichers und/oder die in einem Versorgungsnetz herrschende Last bestimmt werden, wobei ein momentaner Zustands bzw. Wert und/oder ein zukünftiger Zustand bzw. Wert bestimmt werden. Weiterhin umfasst das Verfahren den Schritt des Anpassens des Durchführens kryptographischer Berechnungen in Korrelation mit der Verfügbarkeit der elektrischen Energie (S11).

## Patentansprüche

1. System (10) zum Durchführen von Berechnungen im Zusammenhang mit einer Blockchain, mit
a) mindestens einem Mining-Gerät (12) zum Durchführen kryptographischer Berechnungen im Zusammenhang mit der Blockchain,
b) mindestens einer regenerativen Energiequelle (14), welche elektrische Energie erzeugt, und mindestens einem Speicher (16) für elektrische Energie der regenerativen Energiequelle (14), wobei die abrufbare elektrische Leistung und/oder der Energieertrag der Energiequelle (14) im Laufe eines Tages- und/oder eines Jahres veränderlich sind, wobei
c) das mindestens eine Mining-Gerät (12) dazu eingerichtet ist, von der mindestens einen Energiequelle (14) und/oder dem mindestens einen Energiespeicher (16) Energie für das Durchführen der kryptographischen Berechnung abzunehmen,
**gekennzeichnet durch**
d) eine Steuereinrichtung (18), die dazu eingerichtet ist, das Durchführen der kryptographischen Berechnung durch das Mining-Gerät (12) so anzupassen, dass sich der Verbrauch der elektrischen Energie durch das Mining-Gerät (12) entsprechend verändert,
e) wobei das Anpassen in Abhängigkeit von einem die Energiequelle (14), den Energiespeicher (16) und/oder das Versorgungsnetz (22) betreffenden Messwert und/oder einem die Energiequelle (14), den Energiespeicher (16) und/oder das Versorgungsnetz (22) betreffenden Prognosewert erfolgt.

2. System nach Anspruch 1, wobei der Messwert mit der momentan abgebbaren Leistung der Energiequelle (14), der momentan von dem Energiespeicher (16) aufnehmbaren Leistung, dem Ladezustand des Energiespeichers (16) und/oder der im Versorgungsnetz (22) verfügbaren Leistung korreliert.

3. System nach einem der vorhergehenden Ansprüche, wobei das Mining-Gerät (12), die Energiequelle (14) und gegebenenfalls der Energiespeicher (16) über einen gleichen Netzeinspeisepunkt (20) mit dem Versorgungsnetz (22) verbunden sind.

4. System nach Anspruch 3, wobei neben dem Mining-Gerät (12) und dem Energiespeicher (16) weitere Verbraucher (60) an dem gleichen Netzeinspeisepunkt (20) vorhanden sind.

5. System nach einem der Ansprüche 1-4, wobei der Prognosewert zu einem bestimmten Zeitpunkt und/oder während eines bestimmten Zeitraums eine Verfügbarkeit der von der Energiequelle (14) und/oder dem Energiespeicher (16) abrufbaren Energie bzw. Leistung und/oder die Auslastung des Versorgungsnetzes (22) beschreibt.

6. System nach einem der vorhergehenden Ansprüche, wobei die Steuereinrichtung (18) so eingerichtet ist, dass sie eine Mehrzahl an Mining-Geräten (12, 12', 12") so ansteuern kann, dass ein Energieüberschuss im Versorgungsnetz (22) durch die Mehrzahl an Mining-Geräten (12, 12', 12") zumindest teilweise aufnehmbar ist.

7. Verfahren zum Durchführen von kryptographischen Berechnungen im Zusammenhang mit einer Blockchain, mit den Schritten
a) Bestimmen (S1) einer Verfügbarkeit einer elektrischer Energie
- einer regenerativen Energiequelle, bei der sich die abrufbare elektrische Leistung und/oder deren Energieertrag im Laufe eines Tages und/oder eines Jahres verändern kann, und/oder
- eines Energiespeichers, der von einer solchen regenerativen Energiequelle befüllbar ist und/oder
- eines Versorgungsnetzes; und
b) Anpassen (S2) des Durchführens kryptographischer Berechnungen in Korrelation mit der Verfügbarkeit der elektrischen Energie mit dem Ziel, die für das Durchführen der kryptographischen Berechnungen benötigte elektrische Energie an die Verfügbarkeit der elektrischen Energie anzupassen.

8. Verfahren nach Anspruch 7, wobei das Bestimmen (S10) der Verfügbarkeit der elektrischen Energie
a) das Bestimmen der abrufbaren elektrischen Leistung von der Energiequelle und/oder des Energiespeichers,
b) das Bestimmen des Ladezustands und/oder der Ladeleistung des Energiespeichers und/oder
c) das Bestimmen der im Versorgungsnetz herrschenden Last
umfasst.

9. Verfahren nach Anspruch 8, wobei das Bestimmen das Bestimmen eines momentanen Zustands bzw. Wertes und/oder das Bestimmen eines zukünftigen Zustands bzw. Wertes umfasst.

10. Verfahren nach einem der Ansprüche 7 bis 9, wobei die Anpassung der Durchführung kryptographischer Berechnungen dahingehend erfolgt, dass ein auf einem Mining-Gerät laufender erster Algorithmus zur Erzeugung einer ersten Kryptowährung gestoppt oder niedriger priorisiert wird und ein zweiter Algorithmus zur Erzeugung einer zweiten Kryptowährung auf dem Mining-Gerät gestartet oder höher priorisiert wird.
